# EUROPÄISCHE PATENTSCHRIFT

(11) **EP 3 115 581 B1**
(45) Veröffentlichungstag und Bekanntmachung des Hinweises auf die Patenterteilung: **27.07.2022**
(21) Anmeldenummer: 16001277.9
(22) Anmeldetag: 07.06.2016
(51) Int. Cl.: F02D 41/00, F02D 41/12, F01D 17/02, F01N 3/00, F02D 41/02, F02D 13/06, F02D 13/04, F02D 41/06, F01N 3/021, F01N 3/20, F01N 9/00

(54) **INNENMOTORISCHER HEIZBETRIEB DURCH LASTERHÖHUNG**
INTERNAL MOTOR HEATING OPERATION BY INCREASING LOAD
MODE DE CHAUFFAGE INTERNE PAR AUGMENTATION DU COURANT DE CHARGE

(30) Priorität: 04.07.2015 DE 102015008722
(43) Veröffentlichungstag der Anmeldung: 11.01.2017
(73) Patentinhaber: MAN Truck & Bus SE, 80995 München (DE)
(72) Erfinder: Malischewski, Thomas, 91560 Heilsbronn (DE); Renner, Dominik, 91522 Ansbach (DE)
(74) Vertreter: v. Bezold & Partner Patentanwälte - PartG mbB

(56) Entgegenhaltungen:
- DE-A1- 3 723 703
- DE-A1- 10 348 107
- DE-A1-102007 048 915
- DE-A1-102013 019 183
- US-A1- 2014 034 010
- US-B1- 6 418 720

## Beschreibung

Die Erfindung betrifft ein Betriebsverfahren für eine Vorrichtung, die einen Verbrennungsmotor mit einer Kurbelwelle und mehreren Zylindern und ein Abgasnachbehandlungssystem umfasst. Die Vorrichtung dient vorzugsweise zum Einsatz in einem Kraftfahrzeug, vorzugsweise Nutzfahrzeug, insbesondere Lastkraftwagen oder Omnibus.

Chemische Prozesse in Abgasnachbehandlungssystemen sind üblicherweise erst ab einem gewissen Temperaturniveau aktiv. Wenn das Lastprofil der Verbrennungsmotor-Anwendung es nicht zulässt, genügend Abgasenthalpie/-temperatur zur Verfügung zu stellen, um dieses Temperaturniveau zu erreichen bzw. zu halten, müssen verbrennungsmotorseitig Maßnahmen zur Abgastemperaturerhöhung ergriffen werden.

Aus der DE 103 48 107 A1 ist ein Verfahren zum Aufheizen eines Abgaskatalysators eines Verbrennungsmotors mit mehreren Zylindern bekannt. Um den Abgaskatalysator eines Kraftfahrzeugs mit Verbrennungsmotor schnell auf die erforderliche Betriebstemperatur zu bringen, ohne im Übrigen die Fahreigenschaften zu beeinträchtigen, umfasst das Verfahren die Schritte: Zuführen von einem ersten Luft-/Kraftstoffgemisch in eine erste Gruppe von Zylindern, so dass ein positives Motormoment aufgebaut wird, Zuführen von einem zweiten Luft-/Kraftstoffgemisch in eine zweite Gruppe von Zylindern, wobei ein Einlassventil und/oder ein Auslassventil derart gesteuert werden, dass ein Motorbremsmoment aufgebaut wird. Das erste Luft-/Kraftstoffgemisch in der ersten Gruppe von Zylindern ist fetter als im Normalbetrieb und führt zusammen mit dem zweiten Luft-/Kraftstoffgemisch in der zweiten Gruppe von Zylindern zu einer Aufheizung des Abgaskatalysators.

Aus der DE 37 23 703 A1 ist eine Brennkraftmaschine mit zumindest einem Rußfilter bekannt, wobei das Abgas den Rußfilter durchströmt und bei Unterschreiten einer für die Regeneration des Rußfilters erforderlichen Temperatur des Abgases einzelne Zylinder der Brennkraftmaschine abschaltbar sind. Die Brennkraftmaschine ist in eine fest vorgegebene Anzahl abschaltbarer Zylinder und eine Anzahl feuernder Zylinder unterteilt und in der gemeinsamen Abgasleitung der abschaltbaren Zylinder ist eine Abgasklappe angeordnet. In Strömungsrichtung vor der Abgasklappe verbindet eine Rückführleitung die Abgasleitung der abschaltbaren Zylinder mit der Ansaugleitung der feuernden Zylinder. Bei Regeneration des Rußfilters sind die abschaltbaren Zylinder abgeschaltet und die Abgasklappe ist geschlossen.

Die US 2014/034010 A1 offenbart einen Motor, der in einem Skip-Zylinder-Motorbremsmodus betrieben werden kann. Im Skip-Zylinder-Motorbremsmodus werden ausgewählte Arbeitszyklen ausgewählter Arbeitskammern deaktiviert. Andere ausgewählte Arbeitszyklen der ausgewählten Arbeitskammern werden in einem Bremsmodus betrieben. Dementsprechend werden einzelne Arbeitskammern manchmal deaktiviert und manchmal im Bremsmodus betrieben, während der Motor im Skip-Zylinder-Motorbremsmodus arbeitet.

Die US 6,418,720 B1 offenbart ein Verfahren und eine Anordnung zur Motorbremsung eines Viertakt-Verbrennungsmotors. Im Motorbremsbetrieb wird die Ventilsteuerkurve eines Auslassventils mittels einer Verstellvorrichtung verändert. Im Einzelnen wird ein Eingriffszustand zwischen einer Nockenwelle und einem Ventilmechanismus des Auslassventils durch Schalten zwischen zwei wirksamen Längen des Ventilmechanismus verändert.

Die DE 10 2007 048915 A1 offenbart ferner eine Ventiltriebvorrichtung mit auf einer Nockenwelle angeordnetem Nockenelement mit zwei Nockenpaaren auf. Jedes Nockenpaar weist zwei unterschiedlich ausgestaltete Nocken mit einem gleichen Grundkreisradius auf, wobei die Nocken jeweils für unterschiedliche Betriebsmodi, wie beispielsweise ein Befeuerungsmodus und ein Motorbremsmodus oder einen niedrigen Drehzahlbereich und einen hohen Drehzahlbereich ausgestaltet sein können.

Eine Aufgabe der Erfindung ist es, ein Betriebsverfahren zu schaffen, mittels dem das Temperaturniveau des Abgases für ein Abgasnachbehandlungssystem schneller und/oder effektiver erhöht werden kann, insbesondere bereits bei niedrigen Verbrennungsmotor-Lasten.

Diese Aufgabe kann mit den Merkmalen des Hauptanspruchs gelöst werden. Vorteilhafte Weiterbildungen der Erfindung können den abhängigen Ansprüchen und der folgenden Beschreibung bevorzugter Ausführungsformen der Erfindung entnommen werden.

Die Erfindung schafft ein Betriebsverfahren für eine Vorrichtung, die einen Verbrennungsmotor (z. B. Ottomotor, Gasmotor, Dieselmotor, etc.) mit einer Kurbelwelle und mehreren Zylindern sowie ein Abgasnachbehandlungssystem zur zweckmäßigen Nachbehandlung von Abgas aus dem Verbrennungsmotor und/oder den Zylindern aufweist.

Das Betriebsverfahren zeichnet sich insbesondere dadurch aus, dass bedarfsfallabhängig eine Kraftstoff-Einspritzung in zumindest einen der Zylinder abgeschaltet (z. B. deaktiviert, unterbunden, ausgesetzt, etc.) wird und der zumindest eine abgeschaltete Zylinder, also der zumindest eine Zylinder mit abgeschalteter (z. B. deaktivierter, unterbundener, ausgesetzter, etc.) Kraftstoff-Einspritzung, z. B. mittels eines Bremsnockens in einen Bremsbetrieb (z. B. Dekompression-Betrieb und/oder Betrieb mit negativer Arbeit) versetzt (z. B. geschaltet, etc.) wird, so dass zweckmäßig dadurch die Temperatur des Abgases für das Abgasnachbehandlungssystem erhöht wird.

Bei gegebenem Verbrennungsmotor-Lastprofil kann eine Erhöhung der Temperatur des Abgases (Abgastemperaturniveau) für das Abgasnachbehandlungssystem im Prinzip nur durch eine Verschlechterung des Wirkungsgrads des Verbrennungsmotors erreicht werden.

Die erfindungsgemäße zylinderselektive Abschaltung der Kraftstoff-Einspritzung ermöglicht es, gezielt zumindest einen Zylinder negative Arbeit (also zweckmäßig Verluste) verrichten zu lassen, welche von zumindest einem noch befeuerten Zylinder zu kompensieren ist. Die erzeugbare Verlustleistung wird über eine insbesondere auslassseitige, zylinderselektive Nockenkonturumschaltung verstärkt. Eine andere Nockenkontur lässt den zumindest einen abgeschalteten Zylinder Dekompressions-Arbeit (Arbeit nach dem Dekompressions-Prinzip) verrichten bzw. versetzt diesen in einen Bremsbetrieb und lässt das Abgas für das Abgasnachbehandlungssystem während eines Expansionstaktes aus dem Zylinder entweichen.

Die höhere Lastanforderung des zumindest einen befeuerten Zylinders hat eine starke Abgastemperaturerhöhung zur Folge. Der Luftmassendurchsatz durch das System "Motor" wird somit im Wesentlichen nicht reduziert, was vorteilhaft zusätzlich stark zur Abgasenthalpie-/Abgastemperaturerhöhung beitragen kann, z. B. anders als bei sogenannten gedrosselten Heizbetrieben.

Dadurch, dass zumindest ein Zylinder in einen Bremsbetrieb geschickt wird, ergibt sich vorzugsweise auf dem zumindest einen verbleibenden Zylinder ein erhöhter Mitteldruck und somit eine Erhöhung der Temperatur des Abgases für das Abgasnachbehandlungssystem.

Es ist möglich, dass das angeforderte Kurbelwellenmoment von zumindest einem befeuerten Zylinder erzeugt (z. B. abgearbeitet) wird.

Es ist möglich, dass der zumindest eine in den Bremsbetrieb versetzte Zylinder negative Arbeit (also insbesondere Bremsaktivität und/oder Verluste) verrichtet bzw. erzeugt und die negative Arbeit von zumindest einem befeuerten Zylinder kompensiert wird.

Daraus folgt, dass die Arbeit des zumindest einen befeuerten Zylinders, der das angeforderte Kurbelwellendrehmoment zu erzeugen hat, steigt, so dass auch die Temperatur des Abgases daraus steigt.

Das Betriebsverfahren stellt zweckmäßig einen innermotorischen (innenverbrennungsmotorischen) Heizbetrieb für Abgas für das Abgasnachbehandlungssystem dar.

Erfindungsgemäß erfolgt über das Abschalten des zumindest einen Zylinders und/oder über das Versetzen des zumindest einen abgeschalteten Zylinders in den Bremsbetrieb eine Steuerung der Temperatur des Abgases für das Abgasnachbehandlungssystem.

Erfindungsgemäß erfolgt das Abschalten der Kraftstoff-Einspritzung in zumindest einen der Zylinder und/oder das Versetzen des zumindest einen abgeschalteten Zylinders in einen Bremsbetrieb mittels einer Nockenkonturvorrichtung.

Die Nockenkonturvorrichtung kann einen oder mehrere Nocken aufweisen, die z. B. an derselben Welle oder an voneinander separierten Wellen angeordnet sein können.

Die Vorrichtung umfasst vorzugsweise ferner einen Abgas-Turbolader, z. B. mit Turbine und Verdichter.

Das Abgasnachbehandlungssystem umfasst vorzugsweise zumindest einen Dieseloxidationskatalysator, einen SCR-Katalysator (SCR: selective catalytic reduction) und/oder einen Dieselpartikelfilter.

Es ist möglich, dass die Temperatur des Abgases für das Abgasnachbehandlungssystem, vorzugsweise stromabwärts einer Turbine eines Turboladers, zweckmäßig im erfindungsgemäßen innermotorischen Heizbetrieb im Vergleich zu einem Normalbetrieb erhöht wird, bei insbesondere gleichen Randbedingungen, z. B. bei gleicher Drehzahl und gleicher Lastanforderung.

Zu erwähnen ist, dass im Rahmen der Erfindung in einem befeuerten Zylinder Kraftstoff eingespritzt und vorzugsweise umgesetzt wird, so dass insbesondere der zugehörige Kolben Kurbelwellenarbeit verrichtet. Bei einem unbefeuerten Zylinder ist die Kraftstoff-Einspritzung deaktiviert und/oder erfolgt keine Kraftstoff-Einspritzung, so dass insbesondere der zugehörige Kolben Verluste erzeugt und/oder im Wesentlichen keine Kurbelwellenarbeit verrichtet. Zu erwähnen ist noch, dass das Abschalten der Kraftstoff-Einspritzung in zumindest einen der Zylinder und das Versetzen des zumindest einen abgeschalteten Zylinders in einen Bremsbetrieb im Wesentlichen zeitgleich oder zumindest teilweise sukzessive (Abschalten der Kraftstoff-Einspritzung zeitlich vor Versetzen in Bremsbetrieb oder umgekehrt) erfolgen können.

Das erfindungsgemäße Betriebsverfahren eignet sich insbesondere dazu, bei niedrigen Verbrennungsmotorlasten und/oder geringen angeforderten Kurbelwellenmomenten eine zweckmäßig möglichst hohe Temperatur des Abgases für das Abgasnachbehandlungssystem zu erreichen. Dazu wird die Kraftstoff-Einspritzung in zumindest einen der Zylinder abgeschaltet und der zumindest eine abgeschaltete Zylinder in einen Bremsbetrieb geschickt, woraus sich auf dem zumindest einen verbleibenden Zylinder ein erhöhter Mitteldruck und somit eine erhöhte Abgastemperatur einstellt.

Die Erfindung ist nicht auf ein Betriebsverfahren beschränkt, sondern umfasst auch ein Kraftfahrzeug, vorzugsweise ein Nutzfahrzeug, z. B. einen Lastkraftwagen oder einen Omnibus, mit einer Steuerung, die eingerichtet ist, das Betriebsverfahren wie hierin offenbart auszuführen.

Die zuvor beschriebenen bevorzugten Ausführungsformen und Merkmale der Erfindung sind miteinander kombinierbar, wie in den beigefügten Ansprüchen definiert.
- Figur 1: zeigt ein Flussdiagramm eines Betriebsverfahrens gemäß einer Ausführungsform der Erfindung und
- Figur 2: zeigt simulierte Temperaturverläufe des Abgases für ein Abgasnachbehandlungs-system stromabwärts einer Turbine eines Turboladers in einem Normalbetrieb und einem innermotorischen Heizbetrieb gemäß einer Ausführungsform der Erfindung.

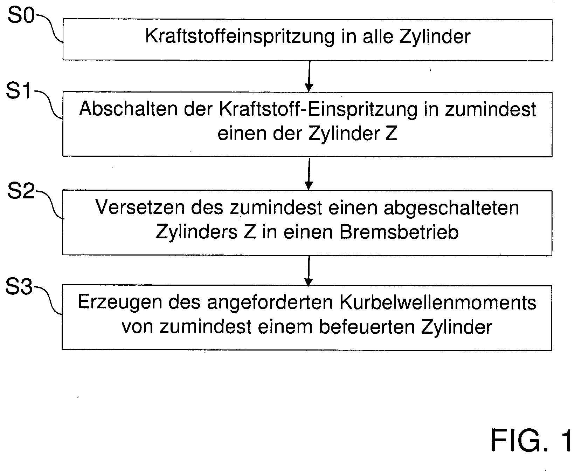

Figur 1 zeigt ein Flussdiagramm eines Betriebsverfahrens gemäß einer Ausführungsform der Erfindung.

Das Betriebsverfahren findet zweckmäßig bei einer Vorrichtung für ein Kraftfahrzeug Anwendung, die einen Verbrennungsmotor mit einer Kurbelwelle und mehreren Zylindern, ein Abgasnachbehandlungssystem zur Nachbehandlung von Abgas aus dem Verbrennungsmotor bzw. den Zylindern und einen Abgas-Turbolader aufweist.

Unter Bezugnahme auf Figur 1 kann z. B. ausgehend von einem Schritt S0, in dem vorzugsweise alle Zylinder befeuert werden (Kraftstoffeinspritzung und Umsetzung), in einem Schritt S1 bedarfsfallabhängig eine Kraftstoff-Einspritzung in zumindest einen der Zylinder Z abgeschaltet werden und in einem Schritt S2 der zumindest eine abgeschaltete Zylinder Z in einen Bremsbetrieb geschickt werden. Die Schritte S1 und S2 können mittels einer Nockenkonturvorrichtung realisiert werden. So kann z. B. über eine Nockenkonturumschaltung gemäß dem aus dem Stand der Technik bekannten "Audi Valve Lift System" von einer normalen Auslassnockenkontur auf die z. B. in DE 10 2013 019 183 A1 beschriebene Auslassnockenkontur, die den in DE 10 2013 019 183 A1 beschriebenen und dargestellten Ventilhüben entspricht,, umgeschaltet werden. Wie in DE 10 2013 019 183 A1 beschrieben, können so die Bremsleistung bestimmter Zylinder und die Abgastemperatur angehoben werden.

Das Betriebsverfahren kann somit das in DE 10 2013 019 183 A1 beschriebene Prinzip nutzen. Um die Verlustleistung abgeschalteter Zylinder zu erhöhen, kann der in DE 10 2013 019 183 A1 wirkende Motorbremsnocken verwendet werden. Die Nockenkontur ermöglicht es, die Bremsleistung der Zylinder, zweckmäßig durch Dekompression des Auslasstaktes, zu erhöhen.

Das Betriebsverfahren kann alternativ oder ergänzend ebenfalls das Prinzip des "Audi Valve Lift System" nutzen. Das "Audi Valve Lift System" dient insbesondere dazu, im Motorbetrieb eine Nockenkontur zu wechseln, so dass zwischen unterschiedlichen Nockenkonturen gewählt werden kann.

Über eine Nockenkonturumschaltung, wie z. B. gemäß dem "Audi Valve Lift System", kann von einer normalen Auslassnockenkontur auf die in DE 10 2013 019 183 A1 beschriebene Auslassnockenkontur, die den in DE 10 2013 019 183 A1 beschriebenen und dargestellten Ventilhüben entspricht, gewechselt werden, so dass wie in DE 10 2013 019 183 A1 beschrieben, die Bremsleistung nicht befeuerter Zylinder, also Zylinder ohne KraftstoffEinspritzung, erhöht wird. Durch die Verschlechterung des Gesamtwirkungsgrades des Motors, erhöht sich die Abgastemperatur entsprechend.

In einem Schritt S3 wird das angeforderte Kurbelwellenmoment von zumindest einem befeuerten Zylinder erzeugt, insbesondere zusätzlich der Verluste bzw. der negativen Arbeit des zumindest einen abgeschalteten, sich in einem Bremsbetrieb befindlichen Zylinders Z.

Die Schritte S1, S2 und S3 bewirken, dass die Temperatur des Abgases aus dem Verbrennungsmotor bzw. dem oder den Zylindern für das Abgasnachbehandlungssystem erhöht wird. Die angeforderte Arbeit des zumindest einen befeuerten Zylinders respektive die Temperatur des Abgases steigt an. Die Reihenfolge der Schritte S1 und S2 und/oder S3 kann im Rahmen der Erfindung zweckmäßig gewählt werden. Die Schritte S1, S2 und S3 können z. B. zumindest teilweise sukzessive und/oder zumindest teilweise im Wesentlichen zeitgleich erfolgen.

Beispiel: Lastanforderung bzw. angefordertes Kurbelwellenmoment: 800 Nm bei 1200 1/min; 6-Zylinder-Motor.

Im Normalbetrieb muss jeder der 6 Zylinder z. B. 90 mg Kraftstoff pro Arbeitsspiel (ASP) umsetzen bzw. verbrennen. Wird die Kraftstoff-Einspritzung beispielsweise der Zylinder 4, 5 und 6 abgeschaltet, so müssen die noch befeuerten Zylinder 1, 2 und 3 entsprechend mehr als 90mg/ASP Kraftstoff umsetzen bzw. verbrennen. Die befeuerten Zylinder müssen nämlich zusätzlich die von den unbefeuerten Zylindern nicht verrichtete Arbeit und deren Verluste durch die Dekompression über den Bremsnocken kompensieren.

Bei den meisten Heizstrategien wird der Wirkungsgrad über eine Verschlechterung des Ladungswechsels erzielt (z. B. Abgasgegendruckplatte, Ansaugdrosselklappe, etc.), was einen verringerten Massendurchsatz zur Folge hat.

Durch die Verwendung des erfindungsgemäßen "innermotorischen Heizbetriebs" wird der Abgasmassenstrom Prinzip-bedingt kaum bis nicht reduziert. Die Abgasenthalpie hat einen höheren Energieeintrag ins Abgasnachbehandlungssystem und dadurch eine schnellere Erwärmung zur Folge.

Das erfindungsgemäße Betriebsverfahren umfasst quasi zwei Freiheitsgrade, nämlich die Abschaltung der Kraftstoff-Einspritzung in zumindest einen der Zylinder und das Versetzen des zumindest ein abgeschalteten Zylinders in einen Bremsbetrieb. Diese beiden Freiheitsgrade ermöglichen eine Steuerung der Temperatur des Abgases für das Abgasnachbehandlungssystem.

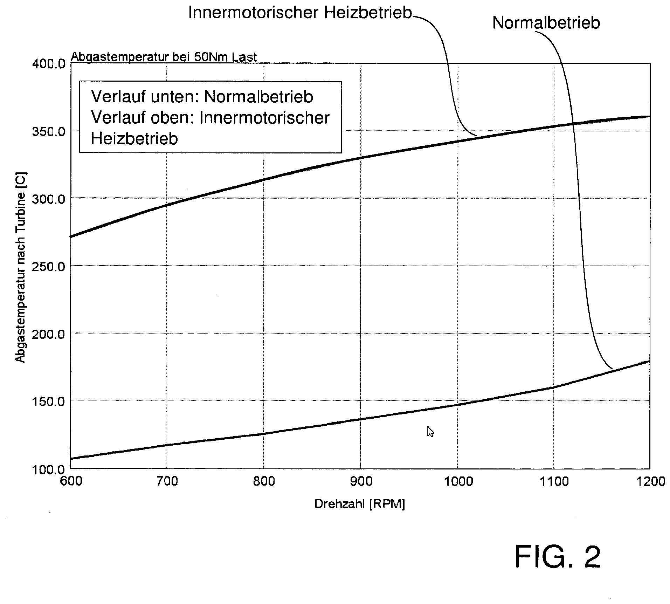

Figur 2 zeigt simulierte Temperaturverläufe der Temperaturen des Abgases für ein Abgasnachbehandlungssystem stromabwärts einer Turbine eines Turboladers.

Die dargestellten simulierten Temperaturverläufe zeigen die Abgastemperaturen nach der Turbine des Turboladers, über der Drehzahl bei 50 Nm Last, im Normalbetrieb (unten) und im erfindungsgemäßen innermotorischen Heizbetrieb (oben) bei einem 6-Zylinder-Verbrennungsmotor.

Werden wie in dieser Berechnung 3 Zylinder abgeschaltet und gebremst und 3 Zylinder befeuert, kann das Abgastemperaturniveau in das gezeigte Temperaturfenster gerückt werden. Die Erfindung ist nicht auf die oben beschriebenen bevorzugten Ausführungsformen beschränkt. Vielmehr ist eine Vielzahl von Varianten und Abwandlungen möglich, wie in den beigefügten Ansprüchen beansprucht.

## Patentansprüche

1. Betriebsverfahren für eine Vorrichtung, die einen Dieselmotor mit einer Kurbelwelle und mehreren Zylindern und ein Abgasnachbehandlungssystem aufweist, wobei bedarfsfallabhängig eine Kraftstoff-Einspritzung in zumindest einen der Zylinder (Z) abgeschaltet wird (S1) und der zumindest eine abgeschaltete Zylinder (Z) in einen Bremsbetrieb versetzt wird (S2), so dass insbesondere die Temperatur des Abgases für das Abgasnachbehandlungssystem erhöht werden kann,
wobei:
eine Steuerung der Temperatur des Abgases für das Abgasnachbehandlungssystem zwei Freiheitsgrade umfasst, nämlich die Abschaltung der Kraftstoff-Einspritzung in zumindest einen der Zylinder (Z) und das Versetzen des zumindest einen abgeschalteten Zylinders (Z) in den Bremsbetrieb; und
das Versetzen des zumindest einen abgeschalteten Zylinders (Z) in den Bremsbetrieb mittels einer Nockenkonturvorrichtung erfolgt.

2. Betriebsverfahren nach Anspruch 1, **dadurch gekennzeichnet, dass** ein angefordertes Kurbelwellenmoment von zumindest einem befeuerten Zylinder erzeugt wird.

3. Betriebsverfahren nach Anspruch 1 oder 2, **dadurch gekennzeichnet, dass** der zumindest eine in den Bremsbetrieb versetzte Zylinder (Z) negative Arbeit verrichtet und die negative Arbeit von zumindest einem befeuerten Zylinder kompensiert wird.

4. Betriebsverfahren nach einem der vorhergehenden Ansprüche, **dadurch gekennzeichnet, dass** das Betriebsverfahren einen innermotorischen Heizbetrieb für das Abgas für das Abgasnachbehandlungssystem darstellt.

5. Betriebsverfahren nach einem der vorhergehenden Ansprüche, **dadurch gekennzeichnet, dass** das Abschalten der Kraftstoff-Einspritzung in zumindest einen der Zylinder (Z) und/oder das Versetzen des zumindest einen abgeschalteten Zylinders (Z) in einen Bremsbetrieb mittels einer Nockenkonturvorrichtung erfolgt.

6. Betriebsverfahren nach einem der vorhergehenden Ansprüche, **dadurch gekennzeichnet, dass** die Vorrichtung einen Abgas-Turbolader aufweist.

7. Betriebsverfahren nach einem der vorhergehenden Ansprüche, **dadurch gekennzeichnet, dass** das Abgasnachbehandlungssystem zumindest einen Diesel-Oxidationskatalysator, einen SCR-Katalysator und/oder einen Dieselpartikelfilter aufweist.

8. Betriebsverfahren nach einem der vorhergehenden Ansprüche, **dadurch gekennzeichnet, dass** die Temperatur des Abgases für das Abgasnachbehandlungssystem, vorzugsweise stromabwärts einer Turbine eines Turboladers, im Vergleich zu einem Normalbetrieb erhöht wird.

9. Kraftfahrzeug, vorzugsweise Nutzfahrzeug, mit einer Steuerung, die eingerichtet ist, das Betriebsverfahren nach einem der vorhergehenden Ansprüche auszuführen.

## Claims

1. Operating method for a device which has a diesel engine having a crankshaft and a plurality of cylinders and an exhaust gas post-treatment system, wherein a fuel injection into at least one of the cylinders (Z) is shut down (S1) when required and the at least one shut-down cylinder (Z) is set to a braking mode (S2) such that, in particular, the temperature of the exhaust gas for the exhaust gas post-treatment system can be increased, wherein:
controlling the temperature of the exhaust gas for the exhaust gas post-treatment system comprises two degrees of freedom, specifically shutting down the fuel injection into at least one of the cylinders (Z) and setting the at least one shut-down cylinder (Z) to the braking mode; and
setting the at least one shut-down cylinder (Z) to the braking mode is accomplished by means of a cam contour device.

2. Operating method according to Claim 1, **characterized in that** a demanded crankshaft torque is produced by at least one firing cylinder.

3. Operating method according to Claim 1 or 2, **characterized in that** the at least one cylinder (Z) which has been set to the braking mode performs negative work, and the negative work is compensated by at least one firing cylinder.

4. Operating method according to one of the preceding claims, **characterized in that** the operating method represents an in-engine heating mode for the exhaust gas for the exhaust gas post-treatment system.

5. Operating method according to one of the preceding claims, **characterized in that** shutting down the fuel injection into at least one of the cylinders (Z) and/or setting the at least one shut-down cylinder (Z) to a braking mode is accomplished by means of a cam contour device.

6. Operating method according to one of the preceding claims, **characterized in that** the device has an exhaust gas turbocharger.

7. Operating method according to one of the preceding claims, **characterized in that** the exhaust gas post-treatment system has at least one diesel oxidation catalytic converter, one SCR catalytic convertor and/or one diesel particulate filter.

8. Operating method according to one of the preceding claims, **characterized in that** the temperature of the exhaust gas for the exhaust gas post-treatment system, preferably downstream of a turbine of a turbocharger, is increased in comparison with a normal mode.

9. Motor vehicle, preferably commercial vehicle, having a control system which is specified for carrying out the operating method according to one of the preceding claims.

## Revendications

1. Procédé de fonctionnement d'un dispositif qui comporte un moteur diesel, muni d'un vilebrequin et de d'une pluralité de cylindres, et un système de post-traitement de gaz d'échappement, l'injection de carburant étant désactivée (S1) dans au moins un des cylindres (Z) selon les besoins et l'au moins un cylindre désactivé (Z) étant placé (S2) dans un mode de freinage de façon à pouvoir augmenter en particulier la température des gaz d'échappement pour le système de post-traitement de gaz d'échappement,
une commande de la température des gaz d'échappement pour le système de post-traitement de gaz d'échappement comprenant deux degrés de liberté, à savoir la désactivation de l'injection de carburant dans l'un au moins des cylindres (Z) et le placement d'au moins un cylindre désactivé (Z) dans le mode de freinage ; et
le placement de l'au moins un cylindre désactivé (Z) dans le mode de freinage étant effectué au moyen d'un dispositif à contour de came.

2. Procédé de fonctionnement selon la revendication 1, **caractérisé en ce qu'**un couple de vilebrequin demandé est généré par au moins un cylindre alimenté.

3. Procédé de fonctionnement selon la revendication 1 ou 2, **caractérisé en ce que** l'au moins un cylindre (Z) placé dans le mode de freinage effectue un travail négatif et le travail négatif est compensé par au moins un cylindre alimenté.

4. Procédé de fonctionnement selon l'une des revendications précédentes, **caractérisé en ce que** le procédé de fonctionnement représente un mode de chauffage interne au moteur pour les gaz d'échappement pour le système de post-traitement de gaz d'échappement.

5. Procédé de fonctionnement selon l'une des revendications précédentes, **caractérisé en ce que** la désactivation de l'injection de carburant dans au moins un des cylindres (Z) et/ou le placement de l'au moins un cylindre désactivé (Z) dans un mode de freinage sont effectués au moyen d'un dispositif à contour de came.

6. Procédé de fonctionnement selon l'une des revendications précédentes, **caractérisé en ce que** le dispositif comporte un turbocompresseur à gaz d'échappement.

7. Procédé de fonctionnement selon l'une des revendications précédentes, **caractérisé en ce que** le système de post-traitement de gaz d'échappement comporte au moins un catalyseur à oxydation diesel, un catalyseur SCR et/ou un filtre à particules diesel.

8. Procédé de fonctionnement selon l'une des revendications précédentes, **caractérisé en ce que** la température des gaz d'échappement pour le système de post-traitement de gaz d'échappement, de préférence en aval d'une turbine d'un turbocompresseur, est augmentée par rapport au fonctionnement normal.

9. Véhicule automobile, de préférence véhicule utilitaire, comprenant une commande qui est conçu pour mettre en œuvre le procédé de fonctionnement selon l'une des revendications précédentes.
